(19) Europäisches Patentamt
European Patent Office
Office européen des brevets

(11) **EP 1 715 410 B1**

(12) **FASCICULE DE BREVET EUROPEEN**

(45) Date de publication et mention
de la délivrance du brevet:
**12.01.2011 Bulletin 2011/02**

(51) Int Cl.:
***G06F 7/72*** *(2006.01)*

(21) Numéro de dépôt: **06112846.8**

(22) Date de dépôt: **20.04.2006**

(54) **Protection d'un calcul effectué par un circuit intégré**

Schutz einer von einem integrierten Schaltkreis durchgeführten Berechnung

Protection of a calculation performed by an integrated circuit

(84) Etats contractants désignés:
**DE FR GB IT**

(30) Priorité: **22.04.2005 FR 0551040**

(43) Date de publication de la demande:
**25.10.2006 Bulletin 2006/43**

(73) Titulaire: **ST MICROELECTRONICS S.A.**
**92120 Montrouge (FR)**

(72) Inventeurs:
• **LIARDET, Pierre-Yvan**
**13790, PEYNIER (FR)**
• **TEGLIA, Yannick**
**13011, MARSEILLE (FR)**
• **POMET, Alain**
**13790, ROUSSET (FR)**

(74) Mandataire: **de Beaumont, Michel**
**1bis, rue Champollion**
**38000 Grenoble (FR)**

(56) Documents cités:
**US-A1- 2004 125 950**

• **JOYE M ET AL: "The Montgomery powering ladder" CRYPTOGRAPHIC HARDWARE AND EMBEDDED SYSTEMS - CHES 2002. 4TH INTERNATIONAL WORKSHOP REVISED PAPERS (LECTURE NOTES IN COMPUTER SCIENCE VOL.2523) SPRINGER-VERLAG BERLIN, GERMANY, 2002, pages 291-302, XP002352874 ISBN: 3-540-00409-2**

## Description

Domaine de l'invention

La présente invention concerne de façon générale les circuits électroniques et, plus particulièrement, la protection de données contenues dans un circuit intégré contre une extraction de ces données suite à des injections de fautes dans le fonctionnement du circuit. L'invention concerne plus particulièrement la protection d'algorithmes d'exponentiation modulaire. De tels algorithmes sont utilisés, par exemple, dans des cartes à puce ou des composants sécurisés pour chiffrer ou signer des données au moyen d'une quantité secrète interne à la puce.

Exposé de l'art antérieur

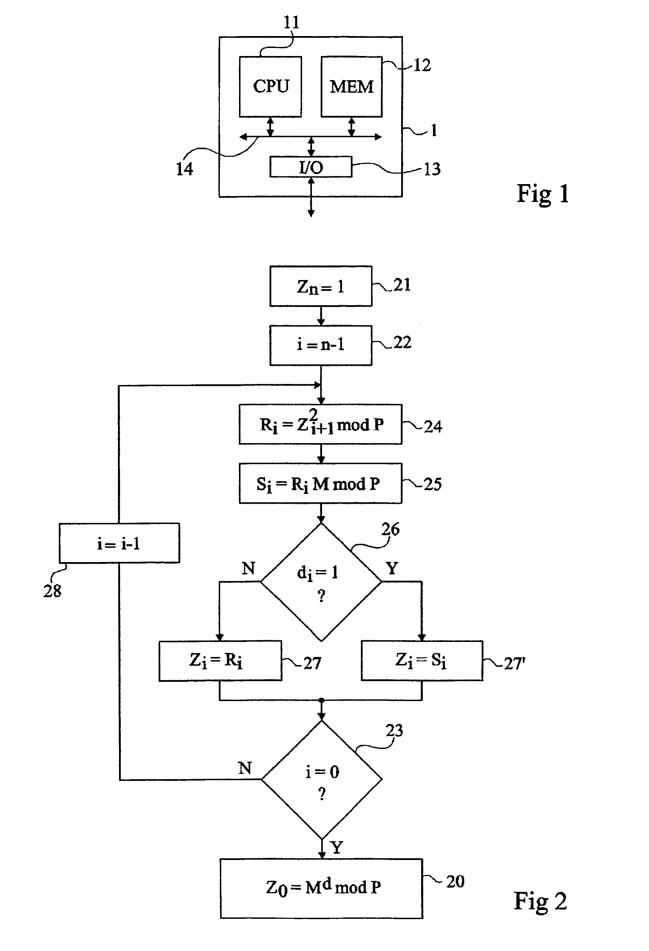

La figure 1 représente, de façon très schématique et sous forme de blocs, un exemple d'architecture simplifiée d'un circuit intégré 1, par exemple d'une carte à puce, du type auquel s'applique la présente invention. Le circuit 1 comporte une unité centrale de traitement 11 (CPU) associée à une ou plusieurs mémoires 12 (MEM) parmi lesquelles généralement au moins un élément de stockage non volatil d'une quantité secrète (par exemple, un code confidentiel), et un circuit 13 d'entrée-sortie (I/O) permettant l'échange des données avec l'extérieur du circuit 1. Les différents éléments communiquent par un ou plusieurs bus 14 de données, d'adresses et de commandes. Le plus souvent, plusieurs mémoires 12 parmi lesquelles au moins une mémoire vive et une mémoire non volatile sont prévues dans le circuit.

Parmi les attaques possibles effectuées par des fraudeurs pour obtenir des données confidentielles de la puce 1, l'invention s'applique aux attaques dites d'exploitation d'injections de fautes (DFA ou Different Fault Analysis) qui consistent à analyser le résultat d'une perturbation du fonctionnement du composant 1 par exemple au moyen d'un rayonnement (laser, infrarouge, rayons X, etc.) ou par d'autres moyens (par exemple, en agissant sur l'alimentation du composant).

Certains circuits intégrés comprennent des outils logiciels pour détecter de telles perturbations en vérifiant qu'un programme s'est exécuté correctement. Par exemple, on exécute deux fois les mêmes instructions et on vérifie qu'elles conduisent aux mêmes résultats, ou on effectue un calcul de signature sur des données extraites de la mémoire. En cas de détection d'une tentative de fraude, le composant est généralement bloqué, c'est-à-dire qu'il ne fournit pas le résultat demandé.

Les données que fournit (sort) le composant sur ses ports d'entrée-sortie sont exploitées par le fraudeur, soit par leur simple existence indiquant une absence de blocage, soit par leur contenu, pour percer des éléments secrets de la puce (algorithme, clé secrète, etc.).

Dans de nombreux algorithmes manipulant des quantités numériques considérées comme ne devant pas être extraites de façon lisible du circuit 1, interviennent une ou plusieurs opérations d'exponentiation modulaire qui font appel à des opérateurs de multiplication. C'est le cas, par exemple, des algorithmes dits DSA, RSA et Diffie-Hellman.

La figure 2 représente, sous forme d'organigramme simplifié, un exemple classique de mise en oeuvre d'un calcul d'exponentiation modulaire, modulo un nombre P sur n bits consistant, à partir d'un message sur plusieurs bits M et d'une quantité secrète ou clé d sur au plus n bits, à calculer le résultat suivant :

$$Z_0 = M^d \bmod P \text{ (bloc 20).}$$

Pour effectuer ce calcul, il est nécessaire de passer par des résultats intermédiaires calculés par multiplications successives. On parle de méthode de carré-multiplication (square-multiply). Ces résultats intermédiaires sont contenus dans un ou plusieurs registres.

Par exemple, on initialise une grandeur $Z_n$ contenue dans un premier registre noté Z comme étant égale à l'unité (bloc 21, $Z_n = 1$). Ce registre Z contiendra, en fin d'algorithme, le résultat final $Z_0$. On initialise ensuite un compteur i comme étant égal à n-1 (bloc 22). L'indice du compteur i correspond aux rangs successifs des n bits de la quantité secrète d qui peut s'écrire :

$$d = \sum_{i=0}^{n-1} d_i 2^i .$$

L'initialisation du compteur d'indice i revient à exécuter un calcul en boucle jusqu'à i = 0 (bloc 23) à chaque itération de laquelle vont être effectuées des multiplications successives en fonction de l'état du bit $d_i$ courant de la quantité d.

Dans une première étape (bloc 24) de cette boucle, on calcule un résultat intermédiaire $R_i$ en élevant au carré (multiplication par lui-même), modulo P, le contenu du registre résultat Z. Ce résultat intermédiaire $R_i$ = $(Z_{i+1})^2$ mod P est, en pratique, stocké dans un registre noté R.

Puis (bloc 25), le résultat de ce calcul est multiplié, modulo P, par le message M. Le résultat $S_i = R_i*M$ mod P de cette deuxième multiplication est stocké dans un autre registre noté S.

On effectue alors un test (bloc 26, $d_i$ = 1 ?) de l'état du bit courant de la quantité d (l'exposant de l'exponentiation). Si cet état est 0 (sortie N du bloc 26), le contenu du registre Z prend la valeur $R_i$ (bloc 27). Si le bit $d_i$ est à l'état 1, le registre Z prend la valeur $S_i$ (bloc 27'). Cela revient à ne pas tenir compte de l'étape de calcul du bloc 25 dans le cas où le bit courant de la clé est à l'état 0.

Tant que la boucle n'est pas terminée (sortie N du bloc 23), le compteur i est décrémenté (bloc 28, i = i-1) et on revient en entrée du bloc 24.

A la fin de la boucle (sortie Y du bloc 23), le registre Z contient la grandeur $Z_0$.

En fait, la grandeur $S_i$ est calculée même si elle n'est pas utilisée pour les bits de clé à l'état 0, de façon à masquer l'exécution de l'algorithme vis-à-vis d'éventuelles attaques par analyse de la consommation du circuit intégré (SPA) en utilisant le multiplieur deux fois par boucle, quel que soit l'état du bit courant de la quantité secrète d.

Un inconvénient est toutefois que cela rend l'exécution de l'algorithme plus sensible aux attaques par injection de faute. En effet, si l'exécution du calcul est perturbée après l'étape du bloc 24 alors que le bit courant de la quantité d est égal à 0, cette perturbation ne modifie pas le résultat intermédiaire $Z_i$ qui doit être fourni en sortie car l'opération effectuée par le multiplieur (bloc 25) n'est pas exploitée. Par contre, si la perturbation intervient alors que le bit courant de la quantité d est à l'état 1, cela va modifier ce résultat intermédiaire.

Lorsque le mécanisme de protection contre les injections de fautes calcule la signature du résultat intermédiaire, ou exécute le calcul une deuxième fois, il ne détecte une tentative de fraude que si la perturbation s'est produite sur une itération d'indice i à l'état 1. Par conséquent, ce mécanisme fournira le résultat final $Z_0$ du calcul si la perturbation a eu lieu pendant le traitement correspondant à un bit de quantité secrète à l'état 0. Une répétition de la perturbation à différents instants (dans différentes itérations) lors d'exécutions successives permet au fraudeur de déterminer la quantité secrète d rien qu'en observant si le composant fournit un résultat (bit à l'état 0) ou non (bit à l'état 1).

Le document US-A-2004125950 décrit un procédé de protection d'algorithmes à clés publiques dans lequel un résultat intermédiaire à prendre en compte dans une étape de multiplication est conditionné par l'état du bit des exposants courant et précédent du calcul d'exponentiation modulaire.

Résumé de l'invention

La présente invention vise à pallier tout ou partie des inconvénients des circuits intégrés manipulant des quantités considérées comme confidentielles contre d'éventuelles fraudes par injection de faute dans le fonctionnement d'un circuit exécutant une exponentiation modulaire.

L'invention vise plus particulièrement à proposer une solution qui soit compatible avec les mécanismes classiques qui empêchent la sortie d'un résultat lorsqu'une perturbation éventuelle est détectée.

L'invention vise également à proposer une solution qui reste compatible avec les objectifs de protection contre d'éventuelles analyses de la consommation du circuit.

Pour atteindre tout ou partie de ces objets ainsi que d'autres, la présente invention prévoit un procédé de protection d'une quantité numérique sur un premier nombre de bits, dans un algorithme exécutant au moins une exponentiation modulaire d'une donnée par ladite quantité, lesdites étapes comprenant au moins une élévation au carré et au moins une multiplication et mettant en oeuvre, pour chaque bit de ladite quantité, des étapes de calcul différentes selon l'état dudit bit, consistant à effectuer un même nombre de multiplications quel que soit l'état dudit bit et à prendre en compte toutes les étapes de calcul utilisant une multiplication pour calculer un résultat final.

Selon un mode de mise en oeuvre de la présente invention, lesdites étapes comprennent un test sur l'état du bit courant de ladite quantité pour conditionner les opérandes d'au moins une étape de multiplication.

Selon un mode de mise en oeuvre de la présente invention, l'algorithme est un algorithme choisi parmi les algorithmes DSA, RSA et Diffie-Hellman.

Selon un mode de mise en oeuvre de la présente invention, pour un nombre n de bits de ladite quantité, un premier registre de stockage du résultat est initialisé avec la valeur unité et lesdites étapes de chacune de n itérations sont :

$$R_i = (S_{i+1})^2 \bmod P \ ; \text{ puis}$$
$$S_i = R_i * M \bmod P \text{ si le bit courant est égal à 0, ou}$$
$$S_i = R_i * (kP+1) \bmod P \text{ sinon,}$$

où $S_i$ désigne la valeur contenue dans le premier registre lors de la boucle de rang i, $R_i$ désigne la valeur contenue dans un deuxième registre lors de la boucle de rang i, P désigne le modulo sur n bits et k désigne un entier relatif non nul.

Selon un mode de mise en oeuvre de la présente invention, pour un nombre n de bits de ladite quantité, un premier registre de stockage du résultat est initialisé avec la valeur unité et lesdites étapes de chacune de n itérations sont :

$$R_i = A^{-1} * (S_{i+1})^2 \bmod P \ ; \text{ puis}$$
$$S_i = R_i * (A*M) \bmod P \text{ si le bit courant est égal à 0, ou}$$
$$S_i = R_i * A \bmod P \text{ sinon,}$$

où $S_i$ désigne la valeur contenue dans le premier registre lors de la boucle de rang i, $R_i$ désigne la valeur contenue dans un deuxième registre lors de l'itération de rang i, P désigne le modulo sur n bits, et A désigne un nombre inversible modulo P.

Selon un mode de mise en oeuvre de la présente invention, pour un nombre n de bits de ladite quantité, un premier registre de stockage du résultat est initialisé avec la valeur unité et lesdites étapes de chacune de n itérations sont :

$$R_i = (R_{i+1}+S_{i+1}) * R_{i+1} \bmod P \text{ puis}$$
$$S_i = (R_{i+1}+S_{i+1}) * S_{i+1} \bmod P \text{ si le bit courant est égal}$$

à 0, ou
$R_i = (R_{i+1}+S_{i+1})*(R_{i+1}+S_{i+1})$ mod P puis
$S_i = R_i*(M-1)$ mod P sinon,

où $S_i$ désigne la valeur contenue dans le premier registre lors de l'itération de rang i, $R_i$ désigne la valeur contenue dans un deuxième registre lors de l'itération de rang i, et P désigne le modulo sur n bits.

Selon un mode de mise en oeuvre de la présente invention, pour un nombre n de bits de ladite quantité, un premier registre de stockage du résultat est initialisé avec la valeur unité et lesdites étapes de chacune de n itérations sont :

$R_i = R_{i+1}*A^{-1}$ mod P puis
$S_i = (R_i)^2*A$ mod P si le bit courant est égal à 0, ou
$R_i = (R_{i+1}*_A{}^{-1})^2$ mod P puis
$S_i = R_i*(M*A)$ mod P sinon,

où $S_i$ désigne la valeur contenue dans le premier registre lors de la boucle de rang i, $R_i$ désigne la valeur contenue dans un deuxième registre lors de la boucle de rang i, P désigne le modulo sur n bits, et A désigne un nombre inversible modulo P.

La présente invention prévoit également un circuit intégré comprenant au moins une unité centrale de traitement, une mémoire et un circuit d'entrée-sortie, comportant des moyens pour empêcher la fourniture d'une donnée à l'extérieur du circuit en cas de détection d'une faute dans l'exécution d'un algorithme.

Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 qui a été décrite précédemment représente, de façon très schématique partielle et sous forme de blocs, un exemple de circuit intégré du type auquel s'applique la présente invention ;
la figure 2 est un organigramme représentant des étapes classiques de calcul d'une exponentiation modulaire ;
la figure 3 représente, sous forme d'organigramme, un premier mode de mise en oeuvre du procédé de calcul d'exponentiation modulaire selon la présente invention ;
la figure 4 est un schéma bloc simplifié et fonctionnel d'éléments du circuit intégré intervenant dans le procédé de la figure 3 ;
la figure 5 représente, sous forme d'organigramme, un deuxième mode de mise en oeuvre du procédé de calcul d'exponentiation modulaire selon la présente invention ; et
la figure 6 est un schéma bloc simplifié et fonctionnel d'éléments du circuit intégré intervenant dans le procédé de la figure 5.

Les mêmes éléments ont été désignés par les mêmes références aux différentes figures. Pour des raisons de clarté, seules les étapes de procédé et éléments de circuit qui sont utiles à la compréhension de l'invention ont été représentés aux figures et seront décrits par la suite. En particulier, les détails constitutifs de l'unité centrale et notamment les opérateurs de type multiplicateur utilisés pour calculer une exponentiation modulaire n'ont pas été exposés, l'invention étant compatible avec tout microprocesseur classique exploitant des données mémorisées. De plus, l'exploitation faite en amont ou en aval de l'algorithme d'exponentiation modulaire traité par l'invention, du message et/ou des quantités secrètes n'a pas été détaillée, l'invention étant là encore compatible avec tout algorithme classique pourvu que celui-ci traite d'une exponentiation modulaire au moyen d'un multiplieur.

Description détaillée

Selon le mode de mise en oeuvre exposé de l'invention, le multiplieur reste utilisé un même nombre de fois (au moins deux fois par boucle) quel que soit l'état du bit courant de la quantité secrète et, de plus, tous les résultats de ces multiplications conditionnent les résultats intermédiaires, donc le résultat final. Par conséquent, en cas d'injection de faute, les mécanismes de protection détecteront un résultat final différent entre deux exécutions ou une absence de signature correcte du résultat final, que la perturbation ait eu lieu dans une boucle d'un bit courant d'exposant à l'état 1 ou à l'état 0. La fourniture ou non d'un résultat ne donne donc pas directement d'information sur le bit de la quantité numérique ayant servi d'exposant.

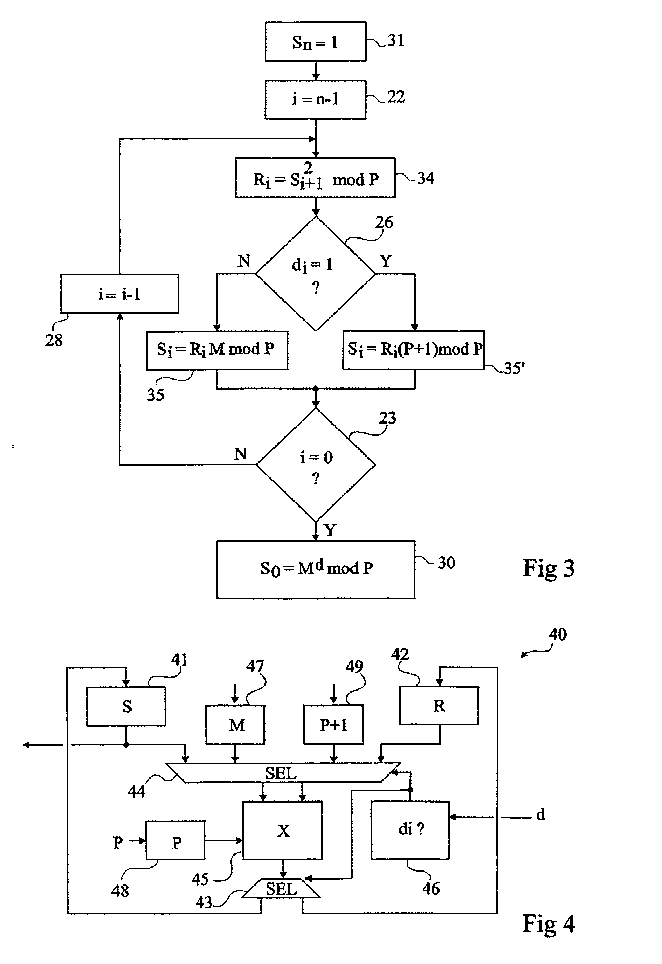

La figure 3 représente, de façon schématique et sous forme d'organigramme, un mode de mise en oeuvre d'un algorithme de calcul d'exponentiation modulaire selon la présente invention.

La figure 4 représente, de façon schématique et sous forme de blocs, un exemple d'éléments (registres, opérateur, etc.) utilisables selon un mode de réalisation du procédé de la figure 3.

On commence (bloc 31, figure 3) par initialiser un registre 41 contenant la grandeur S à 1 ($S_n = 1$). Puis, on initialise (bloc 22) un compteur d'index i à la valeur n-1 pour initialiser un calcul en boucle jusqu'à la valeur i = 0 (bloc 23).

A l'intérieur de la boucle, on commence par calculer un résultat $R_i$ comme étant égal au carré du contenu du registre 41 modulo P (bloc 34, $R_i = (S_{i+1})^2$ mod P). Ce résultat R est stocké dans un registre 42 (figure 4).

Selon l'état du bit courant $d_i$ de la quantité d (bloc 26), on exécute un calcul ou un autre, ces deux calculs modifiant le registre S et mettant en oeuvre le multiplieur. En cas de bit à l'état 0 (sortie N du bloc 26),

le résultat intermédiaire $R_i$ est multiplié par M, modulo P (bloc 35, $S_i = R_i$*M mod P). Dans le cas où le bit est à l'état 1, le résultat intermédiaire $R_i$ est multiplié par P+1, modulo P (bloc 35', $S_i = R_i$*(P+1) mod P).

Tant que l'index i n'est pas nul, celui-ci est décrémenté (bloc 28, i = i-1) et on revient à l'étape 34.

En fin de boucle (sortie Y du bloc 23), le registre 41 contient la valeur $S_0 = M^d$ mod P.

Côté architecture (figure 4), un opérateur de multiplication 45 (X) est chargé par un sélecteur 44 (SEL) quatre vers deux dont les entrées respectives reçoivent les valeurs S, M, P+1 et R stockées, par exemple, dans des registres 41, 47, 49 et 42. Le multiplieur 45 reçoit également le modulo P provenant, par exemple, d'un registre 48 et sa sortie est aiguillée par un sélecteur 43 (SEL) vers le registre 41 ou vers le registre 42 selon l'état du bit $d_i$ de la quantité d. Les sélecteurs 43 et 44 sont commandés par un bloc 46 recevant la quantité d pour la traiter bit par bit.

Un avantage de la présente invention est que, quel que soit l'instant de la perturbation éventuelle du calcul, le résultat final fourni par celui-ci sera perturbé (faux) de sorte que le composant (par exemple, la carte à puce) refusera de le fournir sur l'extérieur. Cela provient du fait que, à chaque fois que le multiplieur est utilisé (bloc 34, 35 ou 35'), le résultat correspondant est utile pour l'obtention du résultat final.

Selon une première variante du premier mode de mise en oeuvre, l'opération du bloc 35' est remplacée par $S_i = R_i$*(kP+1) mod P, où k est un entier relatif quelconque.

Selon une deuxième variante, la donnée M est remplacée par une donnée A*M, où A est une valeur inversible modulo P, et les opérations des étapes 34, 35 et 35' sont respectivement remplacées par les opérations $R_i = A^{-1}$*$(S_{i+1})^2$ mod P, $S_i = R_i$*(A*M) mod P et $S_i = R_i$*A mod P. De préférence, cette variante utilise au moins un registre supplémentaire initialisé avec la valeur A*M, modulo P. Cela permet de maintenir identique le nombre de multiplications quelle que soit la valeur de la quantité secrète d, donc de protéger le calcul contre d'éventuelles attaques par analyse de la consommation du circuit. Pour limiter le nombre d'opérations, un autre registre supplémentaire est initialisé avec la valeur $A^{-1}$, modulo P. En pratique, la valeur A est également stockée dans un registre supplémentaire.

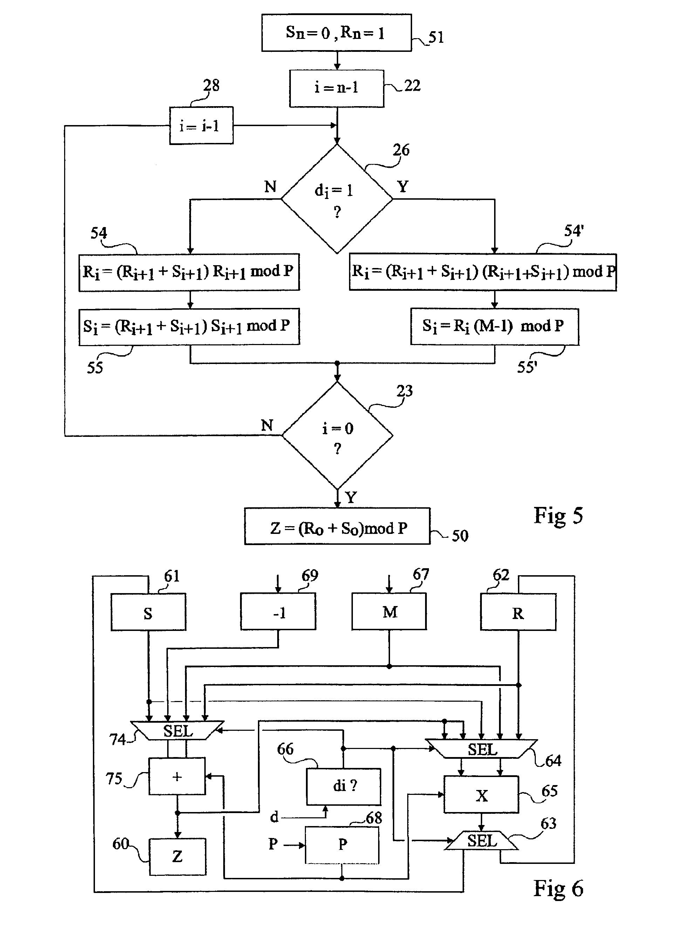

La figure 5 représente, sous forme d'organigramme, un deuxième mode de mise en oeuvre du procédé de l'invention.

La figure 6 représente, de façon schématique et sous forme de blocs, un exemple d'éléments (registres, opérateurs, etc.) utilisables selon un mode de réalisation du procédé de la figure 5.

Selon ce mode de mise en oeuvre, le résultat Z correspond à la somme modulo P des résultats respectifs $R_0$ et $S_0$.

Les valeurs $R_n$ et $S_n$ de deux registres 62 (R) et 61 (S) sont respectivement initialisées à 1 et à 0 (bloc 51) ou l'inverse (0 et 1, respectivement). Puis, le compteur i est initialisé (bloc 22) à la valeur n-1.

La première étape à l'intérieur de la boucle est le test sur la valeur du bit $d_i$ (bloc 26).

Si ce bit $d_i$ est à l'état 1, on effectue deux étapes de calcul successives. La première étape (bloc 54', $R_i = (R_{i+1}+S_{i+1})$*$(R_{i+1}+S_{i+1})$ mod P) revient à calculer le carré de la valeur $Z_{i+1}$ mod P et à la placer dans le registre 62. Dans la deuxième étape (bloc 55', $S_i = R_i$*(M-1) mod P), le contenu R du registre 62 obtenu à l'étape précédente est multiplié, modulo P, par la valeur M-1. Le résultat de cette multiplication est stocké dans le registre 61.

Si le bit $d_i$ est à l'état 0, une première étape (bloc 54, $R_i = (R_{i+1}+S_{i+1})$*$R_{i+1}$ mod P) effectue la somme des valeurs $R_{i+1}$ et $S_{i+1}$ contenues dans les registres 61 et 63, puis multiplie cette somme par la valeur $R_{i+1}$. Le résultat intermédiaire est stocké dans le registre 62. Une deuxième étape (bloc 55, $S_i = (R_{i+1}+S_{i+1})$*$S_{i+1}$ mod P) effectue une opération similaire sur le registre 61 en multipliant, par la valeur $S_{i+1}$, la somme des valeurs $R_{i+1}$ et $S_{i+1}$. Toutes ces opérations sont effectuées modulo P.

En fin de boucle (bloc 50), on somme les contenus des registres 61 et 62 et on obtient la valeur attendue $Z = R_0+S_0$ mod P, soit $M_0$.

Un avantage de ce mode de mise en oeuvre est qu'il permet d'inverser les rôles respectifs des grandeurs R et S, donc d'améliorer la résistance aux attaques par analyse de la consommation.

Côté architecture (figure 6), un opérateur de multiplication 65 (X) est chargé par un sélecteur 64 (SEL) cinq vers deux dont les entrées respectives reçoivent deux fois le résultat d'un additionneur 75 (+), la valeur S (registre 61), la valeur M (registre 67) et la valeur R (registre 62). Le multiplieur 65 reçoit également le modulo P provenant, par exemple, d'un registre 68 et sa sortie est aiguillée par un sélecteur 63 (SEL) vers le registre 61 ou vers le registre 62 selon l'état du bit $d_i$ de la quantité d. L'additionneur est chargé par un sélecteur 74 (SEL) quatre vers deux dont les entrées respectives reçoivent les valeurs S, -1, M et R des registres 61, 69, 67 et 62. L'additionneur 75 reçoit également le modulo P du registre 68 et sa sortie est envoyée sur deux entrées du sélecteur 64 et sur une entrée d'un registre 60 de sortie (valeur Z). Les sélecteurs 63, 64 et 74 sont commandés par un bloc 66 recevant la quantité d pour la traiter bit par bit.

Selon une première variante, les valeurs $R_n$ et $S_n$ sont initialisées à des valeurs telles que $R_n + S_n = 1$ mod P.

Selon une deuxième variante, une valeur supplémentaire A, inversible modulo P, est utilisée et les étapes 54, 54', 55 et 55' exécutent respectivement les calculs suivants : $R_i (R_{i+1}$*$A^{-1})^2$ mod P, $S_i = R_i$*(M*A) mod P, $R_i = R_{i+1}$*$A^{-1}$ mod P et $S_i = (R_i)^2$*A mod P. Le résultat final est obtenu en calculant $Z_0 = S_0$*A mod P. De préférence, cette variante utilise au moins deux registres supplémentaires respectivement initialisés avec les valeurs $A^{-1}$, modulo P et M*A, modulo P. Cela permet de respecter un même nombre de multiplications dans chaque boucle, protégeant ainsi le calcul contre d'éventuelles attaques par analyses de la consommation. En pratique, la valeur A est elle-même contenue dans un registre supplémentaire.

Un avantage de l'invention, quel que soit son mode de mise en oeuvre, est qu'elle rend l'algorithme résistant à des attaques par injection de fautes tout en respectant sa résistance contre des attaques par analyse de la consommation du circuit.

Bien entendu, la présente invention est susceptible de diverses variantes et modifications qui apparaîtront à l'homme de l'art. En particulier, bien que l'invention ait été décrite ci-dessus en relation avec un exemple plus particulièrement destiné aux algorithmes de type RSA, elle s'applique plus généralement dès qu'un algorithme mettant en oeuvre une quantité secrète utilise cette quantité comme exposant d'un calcul de type carré-multiplication (square-multiply). De plus, la mise en oeuvre de l'invention à partir des indications fonctionnelles données ci-dessus est à la portée de l'homme du métier en utilisant des outils en eux-mêmes connus. De même, le choix d'une variante dépend de l'application. Par exemple, si P est un nombre premier positif, tout nombre positif non nul inférieur à P est inversible modulo P, et pourra donc être choisi comme valeur A.

## Revendications

**1.** Procédé de protection d'une quantité numérique (d) sur un premier nombre n de bits, dans un algorithme exécutant au moins une exponentiation modulaire d'une donnée M par ladite quantité avec des étapes de calcul différentes selon l'état de chaque bit de ladite quantité, **caractérisé en ce que** :

un premier registre (31) de stockage d'un résultat est initialisé avec la valeur unité ; et lesdites étapes (34, 35, 35') de chacune de n itérations sont :

$R_i = (S_{i+1})^2$ mod P ; puis
$S_i = R_i$ *M mod P si le bit courant est égal à 0, ou
$S_i = R_i$ * (kP+1) mod P sinon,

où $S_i$ désigne la valeur contenue dans le premier registre lors de la boucle de rang i, $R_i$ désigne la valeur contenue dans un deuxième registre (32) lors de la boucle de rang i, P désigne le modulo sur n bits et k désigne un entier relatif non nul.

**2.** Procédé de protection d'une quantité numérique (d) sur un premier nombre n de bits, dans un algorithme exécutant au moins une exponentiation modulaire d'une donnée M par ladite quantité avec des étapes de calcul différentes selon l'état de chaque bit de ladite quantité, **caractérisé en ce que** :

un premier registre (31) de stockage d'un résultat est initialisé avec la valeur unité et lesdites étapes (34, 35, 35') de chacune de n itérations sont :

$R_i = A^{-1}$ *$(S_{i+1})^2$ mod P ; puis
$S_i = R_i$ *(A*M) mod P si le bit courant est égal à 0, ou
$S_i = R_i$ *A mod P sinon,

où $S_i$ désigne la valeur contenue dans le premier registre lors de la boucle de rang i, $R_i$ désigne la valeur contenue dans un deuxième registre (32) lors de l'itération de rang i, P désigne le modulo sur n bits, et A désigne un nombre inversible modulo P.

**3.** Procédé de protection d'une quantité numérique (d) sur un premier nombre n de bits, dans un algorithme exécutant au moins une exponentiation modulaire d'une donnée M par ladite quantité avec des étapes de calcul différentes selon l'état de chaque bit de ladite quantité, **caractérisé en ce que** :

un premier registre (61) de stockage d'un résultat est initialisé avec la valeur unité et lesdites étapes (54, 54', 55, 55') de chacune de n itérations sont :

$R_i = (R_{i+1}+S_{i+1})$ *$R_{i+1}$ mod P puis
$S_i = (R_{i+1}+S_{i+1})$ *$S_{i+1}$ mod P si le bit courant est égal à 0, ou
$R_i = (R_{i+1}+S_{i+1})$ *$(R_{i+1}+S_{i+1})$ mod P puis
$S_i = R_i$ *(M-1) mod P sinon,

où $S_i$ désigne la valeur contenue dans le premier registre lors de l'itération de rang i, $R_i$ désigne la valeur contenue dans un deuxième registre (62) lors de l'itération de rang i, et P désigne le modulo sur n bits.

**4.** Procédé de protection d'une quantité numérique (d) sur un premier nombre n de bits, dans un algorithme exécutant au moins une exponentiation modulaire d'une donnée M par ladite quantité avec des étapes de calcul différentes selon l'état de chaque bit de ladite quantité, **caractérisé en ce que** :

un premier registre (31) de stockage d'un résultat final est initialisé avec la valeur unité et lesdites étapes (34, 35, 35') de chacune de n itérations sont :

$R_i = R_{i+1}$ *$A^{-1}$ mod P puis
$S_i = (R_i)^2$ *A mod P si le bit courant est égal à 0, ou.
$R_i = (R_{i+1}$ *$A^{-1})^2$ mod P puis

$$S_i = R_i*(M*A) \bmod P \text{ sinon,}$$

où $S_i$ désigne la valeur contenue dans le premier registre lors de la boucle de rang i, $R_i$ désigne la valeur contenue dans un deuxième registre (32) lors de la boucle de rang i, P désigne le modulo sur n bits, et A désigne un nombre inversible modulo P.

**5.** Procédé selon l'une quelconque des revendications 1 à 4, dans lequel l'algorithme est un algorithme choisi parmi les algorithmes DSA, RSA et Diffie-Hellman.

**6.** Circuit intégré comprenant au moins une unité centrale de traitement (11), une mémoire (12) et un circuit d'entrée-sortie (13), **caractérisé en ce qu'**il comporte des moyens pour empêcher la fourniture d'une donnée à l'extérieur du circuit en cas de détection d'une faute dans l'exécution d'un algorithme, adaptés pour mettre en oeuvre les étapes du procédé selon l'une quelconque des revendications 1 à 5.

**Claims**

**1.** A method for protecting a digital quantity (d) over a first number of bits (n), in an algorithm executing at least one modular exponentiation of data (M) by said quantity with different calculation steps according to the state of each bit of said quantity, **characterized in that**
a first register (31) for storing a result is initialized with the unity value; and
said steps (34, 35, 35') of each of n iterations are:

$$R_i = (S_{i+1})^2 \bmod P; \text{ then}$$
$$S_i = R_i*M \bmod P \text{ if the current bit is equal to 0, or}$$
$$S_i = R_i*(kP+1) \bmod P \text{ otherwise,}$$

where $S_i$ designates the value contained in the first register during the loop of rank i, $R_i$ designates the value contained in a second register (32) during the loop of rank i, P designates the modulo over n bits, and k designates a non-zero relative integer.

**2.** A method for protecting a digital quantity (d) over a first number of bits (n), in an algorithm executing at least one modular exponentiation of data (M) by said quantity with different calculation steps according to the state of each bit of said quantity, **characterized in that**
a first register (31) for storing the result is initialized with the unity value and said steps (34, 35, 35') of each of n iterations are:

$$R_i = A^{-1}*(S_{i+1})^2 \bmod P; \text{ then}$$
$$S_i = R_i*(A*M) \bmod P \text{ if the current bit is equal to 0, or}$$
$$S_i = R_i*A \bmod P \text{ otherwise,}$$

where $S_i$ designates the value contained in the first register during the loop of rank i, $R_i$ designates the value contained in a second register (32) during the iteration of rank i, P designates the modulo over n bits, and A designates a number invertible modulo P.

**3.** A method for protecting a digital quantity (d) over a first number of bits (n), in an algorithm executing at least one modular exponentiation of data (M) by said quantity with different calculation steps according to the state of each bit of said quantity, **characterized in that**
a first register (61) for storing the result is initialized with the unity value and said steps (54, 54', 55, 55') of each of n iterations are:

$$R_i = (R_{i+1}+S_{i+1})*R_{i+1} \bmod P; \text{ then}$$
$$S_i = (R_{i+1}+S_{i+1})*S_{i+1} \bmod P \text{ if the current bit is equal to 0, or}$$
$$R_i = (R_{i+1}+S_{i+1})*(R_{i+1}+S_{i+1}) \bmod P, \text{ then}$$
$$S_i = R_i*(M-1) \bmod P \text{ otherwise,}$$

where $S_i$ designates the value contained in the first register during the iteration of rank i, $R_i$ designates the value contained in a second register (62) during the iteration of rank i, and P designates the modulo over n bits.

**4.** A method for protecting a digital quantity (d) over a first number of bits (n), in an algorithm executing at least one modular exponentiation of data (M) by said quantity with different calculation steps according to the state of each bit of said quantity, **characterized in that**
a first register (31) for storing the result is initialized with the unity value and said steps (34, 35, 35') of each of n iterations are:

$$R_i = R_{i+1}*A \bmod P; \text{ then}$$
$$S_i = (R_i)^2*A \bmod P \text{ if the current bit is equal to 0, or}$$
$$R_i = (R_{i+1}*A^{-1})^2 \bmod P, \text{ then}$$
$$S_i = R_i*(M*A) \bmod P \text{ otherwise,}$$

where $S_i$ designates the value contained in the first register during the loop of rank i, $R_i$ designates the value contained in a second register (32) during the loop of rank i, P designates the modulo over n bits, and A designates a number invertible modulo P.

**5.** The method of any of claims 1 to 4, wherein the algorithm is an algorithm selected from among the DSA, RSA, and Diffie-Hellman algorithms.

**6.** An integrated circuit comprising at least a central processing unit (11), a memory (12), and an input/output circuit (13), **characterized in that** it comprises means for preventing the provision of data to the outside of the circuit in case of a fault detection in the execution of an algorithm, adapted to implement the steps of the method of any of claims 1 to 5.

**Patentansprüche**

1. Ein Verfahren zum Schutz einer digitalen Größe (d) über eine erste Anzahl von Bits (n) in einem Algorithmus, der wenigstens eine modulare Exponentiation von Daten (M) durch die Größe ausführt mit unterschiedlichen Berechnungsschritten entsprechend dem Zustand jedes Bits dieser Größe, ist **dadurch gekennzeichnet, dass**

   ein erstes Register (31) zum Speichern eines Ergebnisses mit dem Einheitswert initialisiert wird; und die Schritte (34, 35,35') einer jeden von n Iterationen sind:

   $R_i = (S_{i+1})^2 \bmod P$; danach
   $S_i = R_i{}^* M \bmod P$ wenn das aktuelle Bit gleich 0 ist, oder
   $S_i = R_i{}^* (kP+1) \bmod P$ andernfalls,

   wobei $S_i$ den Wert bezeichnet, der in dem ersten Register während des Durchlaufs des Ranges i enthalten ist, $R_i$ den Wert bezeichnet, der in einem zweiten Register (32) während des Durchlaufs des Ranges i enthalten ist, P den Modulo über n Bits bezeichnet und k eine nicht Null relative Ganzzahl bezeichnet.

2. Ein Verfahren zum Schutz einer digitalen Größe (d) über eine erste Anzahl von Bits (n) in einem Algorithmus, der wenigstens eine modulare Exponentiation von Daten (M) durch die Größe ausführt mit unterschiedlichen Berechnungsschritten entsprechend dem Zustand jedes Bits dieser Größe, ist **dadurch gekennzeichnet, dass**

   ein erstes Register (31) zum Speichern des Ergebnisses mit dem Einheitswert initialisiert wird; und die Schritte (34, 35,35') einer jeden von n Iterationen sind:

   $R_i = A^{-1} {}^*(S_{i+1})^2 \bmod P$; danach
   $S_i = R_i{}^* (A^*M) \bmod P$ wenn das aktuelle Bit gleich 0 ist,
   oder
   $S_i = R_i{}^* A \bmod P$ andernfalls,

   wobei $S_i$ den Wert bezeichnet, der in dem ersten Register während des Durchlaufs des Ranges i enthalten ist, $R_i$ den Wert bezeichnet, der in einem zweiten Register (32) während der Iteration des Ranges i enthalten ist, P den Modulo über n Bits bezeichnet und A eine Anzahl invertierbar nach Modulo P bezeichnet.

3. Ein Verfahren zum Schutz einer digitalen Größe (d) über eine erste Anzahl von Bits (n) in einem Algorithmus, der wenigstens eine modulare Exponentiation von Daten (M) durch die Größe ausführt mit unterschiedlichen Berechnungsschritten entsprechend dem Zustand jedes Bits dieser Größe, ist **dadurch gekennzeichnet, dass**

   ein erstes Register (61) zum Speichern des Ergebnisses mit dem Einheitswert initialisiert wird; und die Schritte (54, 54',55,55') einer jeden von n Iterationen sind:

   $R_i = (R_{i+1} + S_{i+1}) {}^* R_{i+1} \bmod P$; danach
   $S_i = (R_{i+1} + S_{i+1}){}^*S_{i+1} \bmod P$ wenn das aktuelle Bit gleich 0 ist,
   oder
   $R_i = (R_{i+1} + S_{i+1}) {}^* (R_{i+1} + S_{i+1}) \bmod P$, danach
   $S_i = R_i{}^* (M-1) \bmod P$ andernfalls,

   wobei $S_i$ den Wert bezeichnet, der in dem ersten Register während der Iteration des Ranges i enthalten ist, $R_i$ den Wert bezeichnet, der in einem zweiten Register (62) während der Iteration des Ranges i enthalten ist und P den Modulo über n Bits bezeichnet.

4. Ein Verfahren zum Schutz einer digitalen Größe (d) über eine erste Anzahl von Bits (n) in einem Algorithmus, der wenigstens eine modulare Exponentiation von Daten (M) durch die Größe ausführt mit unterschiedlichen Berechnungsschritten entsprechend dem Zustand jedes Bits dieser Größe, ist **dadurch gekennzeichnet, dass**

   ein erstes Register (31) zum Speichern des Ergebnisses mit dem Einheitswert initialisiert wird; und die Schritte (34, 35,35') einer jeden von n Iterationen sind:

   $R_i = R_{i+1} {}^* A^{-1} \bmod P$; danach
   $S_i = (R_i)^{2*} A \bmod P$ wenn das aktuelle Bit gleich 0 ist, oder
   $R_i = (R_{i+1} {}^* A^{-1})^2 \bmod P$, danach
   $S_i = R_i {}^* (M {}^* A) \bmod P$ andernfalls,

   wobei $S_i$ den Wert bezeichnet, der in dem ersten Register während des Durchlaufs des Ranges i enthalten ist, $R_i$ den Wert bezeichnet, der in einem zweiten Register (32) während des Durchlaufs des Ranges i enthalten ist, P den Modulo über n Bits bezeichnet und A eine Anzahl invertierbar nach Modulo P bezeichnet.

5. Das Verfahren nach einem der Ansprüche 1 bis 4, wobei der Algorithmus ein Algorithmus ist der aus einem der DSA, RSA oder Diffie-Hellman Algorithmen ausgewählt wurde.

6. Ein integrierter Schaltkreis der wenigstens eine zentrale Verarbeitungseinheit (11), einen Speicher (12) und einen Eingangs/Ausgangs Schaltkreis (13) aufweist, **dadurch gekennzeichnet dass** er Mittel aufweist zum Vermeiden des Bereitstellens von Daten außerhalb des Schaltkreises im Fall einer falsch Detektion während der Ausführung eines Algorithmus, der geeignet ist die Schritte des Verfahrens nach einem der Ansprüche 1 bis 5 auszuführen.

Fig 1

$Z_n = 1$ — 21

$i = n-1$ — 22

$R_i = Z_{i+1}^2 \bmod P$ — 24

$S_i = R_i M \bmod P$ — 25

$i = i-1$

28

$d_i = 1$ ? — 26

N          Y

$Z_i = R_i$ — 27

$Z_i = S_i$ — 27'

$i = 0$ ? — 23

N

Y

$Z_0 = M^d \bmod P$ — 20

Fig 2

$$S_n = 1$$ — 31

$$i = n-1$$ — 22

$$R_i = S_{i+1}^2 \bmod P$$ — 34

26

$$d_i = 1\ ?$$

N          Y

28
$$i = i-1$$

$$S_i = R_i M \bmod P$$ — 35

$$S_i = R_i(P+1)\bmod P$$ — 35'

23

$$i = 0\ ?$$

N          Y

$$S_0 = M^d \bmod P$$ — 30

Fig 3

40

41
S

47
M

49
P+1

42
R

44
SEL

P → P — 48

X — 45

di ? — 46 ← d

43
SEL

Fig 4

$$S_n = 0, R_n = 1 \quad \text{—} 51$$

$$i = n-1 \quad \text{—} 22$$

$$i = i-1 \quad \text{—} 28$$

$$d_i = 1 ? \quad \text{—} 26$$

N      Y

$$54$$
$$R_i = (R_{i+1} + S_{i+1}) R_{i+1} \bmod P$$

$$54'$$
$$R_i = (R_{i+1} + S_{i+1}) (R_{i+1}+S_{i+1}) \bmod P$$

$$S_i = (R_{i+1} + S_{i+1}) S_{i+1} \bmod P$$
$$55$$

$$S_i = R_i (M-1) \bmod P$$
$$55'$$

$$i = 0 ? \quad \text{—} 23$$

N

$$Y$$

$$Z = (R_0 + S_0) \bmod P \quad \text{—} 50$$

**Fig 5**

| 61 | 69 | 67 | 62 |
|----|----|----|----|
| S | -1 | M | R |

SEL   74

SEL   64

66   di ?

+   75

X   65

d

68   P

P  →

SEL   63

60   Z

**Fig 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004125950 A